# EUROPÄISCHE PATENTSCHRIFT

(11) **EP 3 573 841 B1**
(45) Veröffentlichungstag und Bekanntmachung des Hinweises auf die Patenterteilung: **01.10.2025**
(21) Anmeldenummer: 18702177.9
(22) Anmeldetag: 23.01.2018
(51) Int. Cl.: B44C 1/17, B29C 37/00, B32B 3/00

(54) **TRANSFERFOLIE, DEREN VERWENDUNG UND VERFAHREN ZUR HERSTELLUNG EINER TRANSFERFOLIE SOWIE VERFAHREN ZUR HERSTELLUNG EINES MIT EINER TRANSFERLAGE EINER TRANSFERFOLIE DEKORIERTEN SPRITZGUSSARTIKELS**
TRANSFER FOIL, USE THEREOF, A METHOD FOR PRODUCING A TRANSFER FOIL, AND A METHOD FOR PRODUCING AN INJECTION-MOULDED ARTICLE DECORATED USING A TRANSFER LAYER OF A TRANSFER FOIL
FILM DE TRANSFERT, UTILISATION DE CELUI-CI ET PROCÉDÉ DE FABRICATION D'UN FILM DE TRANSFERT AINSI QUE PROCÉDÉ DE FABRICATION D'UN ARTICLE MOULÉ PAR INJECTION DÉCORÉ D'UNE COUCHE DE TRANSFERT D'UN FILM DE TRANSFERT

(30) Priorität: 27.01.2017 DE 102017101595
(43) Veröffentlichungstag der Anmeldung: 04.12.2019
(73) Patentinhaber: Leonhard Kurz Stiftung & Co. KG, 90763 Fürth (DE)
(72) Erfinder: SCHMIDT, Jürgen, 91154 Roth (DE); KOTT, Wolfgang, 90574 Roßtal (DE)
(74) Vertreter: Louis Pöhlau Lohrentz
(86) Internationale Anmeldenummer: PCT/EP2018/051574
(87) Internationale Veröffentlichungsnummer: WO 2018/138082

(56) Entgegenhaltungen:
- WO-A1-2014/203507
- WO-A2-2006/108611
- US-A- 3 666 516
- US-A1- 2010 104 807

## Beschreibung

Die Erfindung betrifft eine Transferfolie, deren Verwendung und ein Verfahren zur Herstellung einer Transferfolie. Ferner betrifft die Erfindung ein Verfahren, insbesondere ein IMD-Verfahren (IMD = In-Mold-Decoration), zur Herstellung eines mit einer Transferlage einer Transferfolie dekorierten Spritzgussartikels.

Verbundformteile aus einer Folie und einem Kunststoffformkörper sind seit längerem bekannt. Von immer größerer Bedeutung erlangen Verbundformteile mit einer Oberfläche mit taktil bzw. haptisch fühlbaren Eigenschaften, insbesondere mit einer Soft-Touch-Beschichtung. Je nach Beschichtung weist diese eine samtige, gummiartige oder auch weiche Oberfläche auf. Derartige Formteile erlangen bei Kommunikationsgeräten sowie im Fahrzeug-, Schiff- und Flugzeugbau an immer größerer Bedeutung.

In der Regel werden Verbundelemente aus einer Soft-Touch-Schicht und dem Kunststoffbauteil mittels nachträglicher Lackierung des Bauteils hergestellt. Hierbei wird ein Lack mit Pigmenten, Füllstoffen etc. direkt nass vollflächig aufgebracht. Die kleinen Teilchen der Pigmente, Füllstoffe etc. ergeben dann an der trockenen Oberfläche eine optische Veränderung und über eine veränderte Reibung einen Beitrag zum taktilen Softtoucheffekt bei Darüberstreichen bzw. Berühren. Ein Beispiel einer optischen Veränderung wäre eine Mattierung, verbunden mit einer erhöhten Reibung bei Darüberstreichen bzw. Berühren.

Dieses nachträgliche und insbesondere vollflächige Aufbringen der Soft-Touch-Schicht bringt einige Nachteile mit sich. Zum einen ist hierzu eine Vielzahl an Arbeitsschritten notwendig, die zum Teil manuell ausgeführt werden müssen. Ferner liegt die Ausschussrate vergleichsweise hoch. Des Weiteren erfordert dieses Verfahren eine sehr hohe Schichtdicke, so dass hiermit hohe Kosten und hoher Materialverbrauch einhergehen. Zudem führen die aus der Oberfläche hervorstehenden Teilchen dazu, dass die Oberfläche kratzempfindlich ist. Eine weitere wichtige Einschränkung dieses bekannten Vorgehens ist, dass durch das vollflächige Auftragen eine Erzeugung von Dekoren bzw. Motiven, d.h. eine partielle Soft-Touch-Schicht, nicht möglich ist.

JP 2015-182302 A beschreibt eine Dekorfolie und ein dekoratives Kunststoffformteil.

Es ist somit Aufgabe der vorliegenden Erfindung eine Transferfolie, mit einem Softtoucheffekt bereitzustellen, die in einem breiten Anwendungsbereich, insbesondere auch im Bereich des IMD, zum Einsatz kommen kann, ohne dass sich dabei die Eigenschaften im Hinblick auf die Haptik verschlechtern.

Die Aufgabe wird mit einer Transferfolie, insbesondere Heißprägefolie, nach Anspruch 1 gelöst.

Die Aufgabe wird weiter mit einem Verfahren zur Herstellung einer Transferfolie, insbesondere zur Verwendung als IMD-Soft-Touch-Folie, nach Anspruch 9 gelöst.

Die Aufgabe wird weiter mit einem Verfahren, insbesondere eines IMD-Verfahren, zur Herstellung eines mit einer Transferlage einer Transferfolie dekorierten Spritzgussartikels mit den folgenden Schritten, gelöst:
- Anordnen einer erfindungsgemäßen Transferfolie in eine Spritzgussform,
- Hinterspritzen der Transferfolie mit einer Kunststoffspritzmasse,
- Abziehen der Trägerfolie zusammen mit der Masterstruktur von der Transferlage der Transferfolie.

Durch die Erfindung wird es ermöglicht, eine Transferfolie bzw. eine Transferlage einer Transferfolie mit einem Softtoucheffekt zu erhalten, wobei das Dekor der Folie frei wählbar ist, d. h. man ist nicht auf eine Farbe wie beim vollflächigen Sprühlackieren beschränkt. Ferner sind Bereiche mit unterschiedlich optischen Eigenschaften, insbesondere bzgl. Reflexion, Absorption, Brechungsindex, beispielsweise matt-glänzende Effekte möglich und die einzelnen Effekte lassen sich an den jeweiligen Einsatzzweck entsprechend anpassen. Des Weiteren lässt sich die Folie gut im IMD-Verfahren einsetzen.

Dies wird vorliegend insbesondere durch die Strukturierung der Oberfläche des Topcoats mittels der Masterstruktur erreicht. Hierdurch können die funktionalen Eigenschaften des Topcoats gesteuert werden, wodurch sich insbesondere das taktile Gefühl der Oberfläche, insbesondere die Griffigkeit, die Fingerprintempfindlichkeit, schmutzabweisende und/oder flüssigkeitsabweisende Funktionen und/oder der Grad der Mattierung steuern lassen. Die in den Topcoat eingebrachte Struktur sorgt insbesondere für den Soft-Touch-Effekt der Transferfolie, insbesondere für den Soft-Touch-Effekt der Transferlage der Transferfolie.

Gemäß der Erfindung wird unter Soft-Touch-Effekt insbesondere ein Effekt verstanden, der ein angenehmes, samtweiches Tastgefühl - ähnlich einer Pfirsichhaut - erzeugt. Die für den Topcoat verwendeten Lacke weisen dabei an ihrer Oberfläche insbesondere einen weichen Griff auf. Insgesamt weisen Lacke mit einem Soft-Touch-Effekt an ihrer Oberfläche insbesondere einen haptisch fühlbaren Effekt auf.

Durch die Erfindung wird ferner ermöglicht, dass der Topcoat eine Strukturierung aufweist, ohne dass dieser Pigmente, insbesondere Partikel und/oder Feststoffpartikel, enthalten muss. Dies wird insbesondere dadurch erreicht, dass sich die Masterstruktur lediglich in den Topcoat einformt. Dies bedeutet insbesondere, dass sich die Masterstruktur negativ abformt und in dem Topcoat entsprechende Vertiefungen hinterlässt. Insgesamt lassen sich durch die erfindungsgemäße Folie die taktilen Eigenschaften, insbesondere indem die Reibung erhöht wird, sowie die optischen Eigenschaften verbessern. Ferner wird auch die Fingerprint-Anfälligkeit verringert.

Der Topcoat ist so ausgebildet, dass er einen Soft-Touch-Effekt aufweist. Idealerweise ist der Topcoat als Softtouchlack ausgebildet.

Ein Strukturlack weist die Masterstruktur auf. Hierzu weist der Strukturlack bevorzugt eine erhabene Struktur bzw. Oberfläche auf.

Bei einer Ausführungsform besteht die Trägerfolie aus einem Strukturlack, insbesondere aus einem selbsttragenden Strukturlack. Handelt es sich um einen selbsttragenden Strukturlack, dann ist dieser bevorzugt aus Silikon ausgebildet. Der Strukturlack weist vorteilhafterweise eine Shore A-Härte von 10 bis 50 auf.

Die Dicke des selbsttragenden Strukturlacks liegt bevorzugt zwischen 10 µm und 5000 µm, insbesondere zwischen 10 µm und 500 µm, insbesondere bevorzugt zwischen 10 µm und 250 µm. Vorteilhafterweise wird die Masterstruktur mittels Prägen in den Strukturlack eingebracht. Der selbsttragende Strukturlack kann beispielsweise eine direkt strukturierte selbsttragende Folie sein, in die bevorzugt mittels Prägen/Replikation und/oder Ätzen und/oder Gravieren und/oder Laserstrukturierung eine Struktur in das Folienmaterial eingebracht wird bzw. ist.

Bei einer weiteren Ausführungsform weist die Trägerfolie eine Trägerschicht und einen auf der Trägerschicht in Richtung der Transferlage angeordneten Strukturlack auf. Die Trägerschicht ist bevorzugt aus ABS, ABS/PC, PET, PC, PMMA, PE und/oder PPP ausgebildet. Die Schichtdicke der Trägerschicht liegt vorteilhafterweise zwischen 5 µm und 500 µm, insbesondere zwischen 6 µm und 100 µm.

Bevorzugt ist der Strukturlack vollflächig auf der Trägerschicht angeordnet. Dies bedeutet, dass sich der Strukturlack über die gesamte Trägerschicht erstreckt. Es ist aber auch möglich, dass der Strukturlack nur partiell, also bereichsweise, auf der Trägerschicht angeordnet ist. Bevorzugt ist der Strukturlack im Dekor auf der

Trägerschicht angeordnet. Durch die lediglich bereichsweise Anordnung des Strukturlacks auf der Trägerschicht kann insgesamt ein matt-glänzender Effekt realisiert werden. Die verschiedenen matten und/oder glänzenden Bereiche zeichnen sich neben den unterschiedlichen optischen Eigenschaften insbesondere hinsichtlich Reflexion, Absorption und/oder Brechungsindex, insbesondere durch unterschiedliche Reibung und unterschiedliche taktile Eigenschaften, aus.

Dabei kann ein optischer Unterschied zwischen einem matten und einem weniger matten, insbesondere glänzenden oder auch einem stärker glänzenden Bereich, insbesondere ab einem optisch wahrnehmbaren Glanzunterschied von 2, gemessen bei 60° Messwinkel mit Messgerät micro-gloss von Byk-Gardener, mit dem unbewaffneten menschlichen Auge wahrgenommen werden.

Ist der Strukturlack im Dekor bzw. bereichsweise auf der Trägerschicht angeordnet, dann entstehen bevorzugt Bereiche, die matt wirken, nämlich insbesondere diejenigen Bereiche, in denen sich der Strukturlack befindet, und Bereiche, die glänzend bleiben. Bei den glänzenden Bereichen kann es sich um die Oberfläche der Trägerschicht handeln. Es ist aber auch möglich, dass in denjenigen Bereichen, wo kein Strukturlack vorhanden ist, eine weitere Lackschicht auf die Trägerschicht, insbesondere ein glatter Lack, aufgebracht ist.

Bevorzugt weist die Masterstruktur bzw. der Strukturlack und/oder der Topcoat wenigstens bereichsweise eine homogene Oberflächenstruktur auf. Im Sinne der Erfindung ist unter homogener Oberflächenstruktur insbesondere eine Struktur zu verstehen, die so ausgebildet ist, dass die Oberfläche, bevorzugt in einem Flächenbereich, einheitlich erscheint. In dem Flächenbereich sind dann keine optischen Oberflächendefekte sichtbar.

Der Strukturlack ist bevorzugt aus Melamin, Polyurethan (PU), Polyacrylate, Polyol, Isocyanat und/oder Polyvinylchlorid ausgebildet. Vorteilhafterweise weist der Strukturlack eine Schichtdicke von 0,1 µm bis 10 µm, insbesondere von 0,5 µm bis 7 µm, auf.

Vorteilhafterweise weist die Masterstruktur bzw. der Strukturlack eine Strukturtiefe von 1 µm bis 10 µm, bevorzugt zwischen 2 µm und 4µm, insbesondere zwischen 3 µm und 4 µm, auf. Durch eine derartige Strukturtiefe kann ein besonders guter Soft-Touch-Effekt des Topcoats erreicht werden.

Es ist aber auch möglich, dass die Strukturtiefen größer sind. Dies wird bevorzugt dadurch erreicht, dass die Masterstruktur bzw. der Strukturlack größere Teilchen bzw. Partikel aufweist. Durch die Auswahl von Teilchen bzw. Partikeln mit entsprechender Größe lässt sich die Strukturtiefe der Masterstruktur bzw. des Strukturlacks an den jeweiligen Einsatz bestmöglich anpassen. Erfindungsgemäß weist die Masterstruktur bzw. der Strukturlack Füllstoffe als strukturgebende Teilchen auf. Mögliche Füllstoffe können dabei Silikonkügelchen, mineralische Füller (z.B. Korund oder gemahlene Flusskiesel), anorganische Füller (z.B. SiO₂) und/oder auch Polyurethan-Partikel sein. 50 % bis 80 % der strukturgebenden Teilchen sind zwischen 2 µm und 4 µm groß. Die restlichen 20 % bis 50 % der Teilchen sind aus größeren Teilchen gebildet. Die Größe der größeren Teilchen beträgt 6 µm bis 15 µm.

Die Teilchen sind prinzipiell auf keine feste Form festgelegt. Die Teilchen können sowohl als insbesondere kantiges Bruchgut wie auch sphärisch ausgebildet sein. Idealerweise können die in der Masterstruktur bzw. dem Strukturlack befindlichen Teilchen unterschiedlich ausgebildet sein. Von Vorteil ist es, wenn die Form der Teilchen an die jeweiligen Bedürfnisse angepasst ist.

Von Vorteil ist es, wenn die Masterstruktur bzw. der Strukturlack eine chemische inerte Oberfläche aufweist. Im Sinne der Erfindung ist inerte Oberfläche insbesondere dahingehend zu verstehen, dass die Oberfläche unter den jeweils gegebenen Bedingungen mit potentiellen Reaktionspartnern, wie beispielsweise Luft, Wasser, dem Topcoat, nicht oder nur in verschwindend geringem Maße reagieren. Hierdurch kann sichergestellt werden, dass es nicht zu einer Verbindung bzw. Vereinigung zwischen Topcoat und Masterstruktur kommt und so eine Trennung von Topcoat und Masterstruktur möglich ist.

Bevorzugt weist der Strukturlack zumindest eine UV-härtbare und/oder zumindest eine Isocyanat-Komponente und/oder zumindest eine Melamin-Komponente auf.

Vorteilhafterweise ist der Topcoat aus langkettigen Polymeren ausgebildet. Die Polymere können vernetzt ausgebildet sein. Die Vernetzung basiert bevorzugt auf UV-Härtung und/oder auf chemischen Reaktionen.

Der Topcoat ist aus Copolymeren aus PU und Polyol und/oder aus Copolymere aus Polyurethan (PU) und Polyacrylate ausgebildet.

Die Schichtdicke des Topcoats liegt vorteilhafterweise zwischen 0,5 µm und 100 µm, insbesondere zwischen 0,2 µm 50 µm, besonders bevorzugt zwischen 5 µm und 30 µm.

Der Topcoat, insbesondere die Bindemittelmatrix des Topcoats, kann Füllstoffe, bevorzugt kugelförmige Füllstoffe aus PMMA, Silikone, Polyurethane, verschiedene Copolymere und/oder Mineralstoffe, aufweisen. Ferner kann der Topcoat, insbesondere die Bindemittelmatrix des Topcoats, silikonhaltige Acrylate, silikonhaltige Polyurethane, Öle, Wachse und/oder Wachsdispersionen aufweisen. Durch den Einsatz von derartigen Additiven bzw. Füllstoffen kann die Elastizität des Topcoats und/oder die damit verbundenen taktilen bzw. haptischen Eigenschaften, als das sogenannte "Feel" verstärkt werden.

Vorteilhafterweise weist der Topcoat Silikone auf. Durch die Verwendung von Silikonen kann die Kratzbeständigkeit, der Griff sowie die Oberflächengüte des Topcoats verbessert werden. Des Weiteren lässt sich durch den Einsatz von Silikon die Ablöseeigenschaften zwischen Topcoat und Strukturlack steuern.

Bevorzugt weist der Topcoat UV-härtbare Komponenten auf. Vorteilhafterweise können die UV-härtbaren Komponenten dabei als Neben- oder Hauptbinder zum Einsatz kommen.

Der Topcoat weist einen Glanzgrad zwischen 20 und 60, bevorzugt zwischen 30 und 50, auf. Diese vergleichsweise hohen Glanzgrade werden dabei bei einem Messwinkel von 85° mit dem Messgerät "micro-gloss" von BYK-Gardener gemessen.

Um eine weitere Mattierung des Topcoats zu erzielen, kann der Topcoat Mattierungsmittel aufweisen. Mögliche Mattierungsmittel können dabei Silikonkügelchen, mineralische Füller (z.B. Korund oder gemahlene Flusskiesel), anorganische Füller (z.B. SiO₂), Polytetrafluorethylen (PTFE, Teflon^{®}) oder auch Polyurethan-Partikel sein.

Idealerweise verfügt der Topcoat über eine Dehnung von mindestens 50 %, bevorzugt von mindestens 100 %, insbesondere bevorzugt von mindestens 200 %. Hierdurch wird ein umformfähiger Topcoat ermöglicht. Durch ein derartiges Dehnungsverhalten des Topcoats eignet sich die Transferfolie besonders gut zur Verwendung in IMD-Verfahren. Während der Umformung im IMD-Verfahren nimmt die Trägerfolie den Großteil der Zugkräfte auf. Durch die Dehnungseigenschaften des Topcoats wird insbesondere sichergestellt, dass beim Anliegen an die Kontur des Spritzgusswerkzeugs der Topcoat, insbesondere durch Reißen oder Mikrorisse, keinen Schaden annimmt. Die Werte der Dehnung sind im genormten Zugversuch (DIN 53504, ISO 37) mit dem Prüfgerät Zwick Z005 der Firma Zwick GmbH & Co. KG, Ulm ermittelt worden.

Von Vorteil ist es, wenn der Topcoat eine Temperaturbeständigkeit von bis zu 200 °C aufweist. Hierdurch kann sichergestellt werden, dass der Topcoat den thermischen Belastungen durch das Spritzgussmaterial, insbesondere im IMD-Verfahren, standhält und es insbesondere nicht zu einer Veränderung der Strukturierung bzw. der Oberfläche des Topcoats kommt.

Der Topcoat bzw. die Oberfläche des Topcoats ist bevorzugt so ausgebildet, dass er gegenüber Lösungsmittel, wie beispielsweise Isopropanol und MEK, gegenüber Bewitterung, wie beispielsweise Sonnenlicht, Regen und/oder Tau, gegenüber Lebensmittel, wie beispielsweise Kaffee, gegenüber Reinigungsmittel und/oder gegenüber mechanischen Beanspruchungen sowie gegenüber hohen thermischen Belastungen standhalten kann.

Der Topcoat kann beispielsweise eine Bleistifthärte HB (HB = hard black = mittelhart) aufweisen. Die Bleistifthärte wird insbesondere gemessen nach ASTM 3363 mit dem Bleistifthärteprüfer SH3000 der Firma mtv Messtechnik, Erftstadt, Deutschland. Dabei werden Bleistifte mit abgestuftem Härtegrad mit definiertem Winkel und Last über die zu prüfende Oberfläche geschoben. Insbesondere für die ASTM D 3363 wird die Prüfung mit dem härtesten Bleistift begonnen und in der Härteskala nach unten fortgeführt, um zu ermitteln, welcher nächstweichere Bleistift die Beschichtung nicht (mehr) beschädigt und welcher nächstweichere Bleistift keinen Kratzer in der Beschichtung (mehr) erzeugt. Durch die Kombination aus Oberflächenstruktur und Weichheit des Topcoats werden die taktilen Eigenschaften des Topcoats weiter verbessert. Zudem wird ein stark mattierender Effekt erzeugt. Insgesamt kann so ein deutlicher Soft-Touch-Effekt erzielt werden.

Denkbar ist, dass der Topcoat eine geringere Härte als die Masterstruktur, als der Strukturlack und/oder als bekannte Schutzlackierungen von IMD-Folien aufweist.

Von Vorteil ist es, wenn zwischen dem Topcoat und der Masterstruktur eine Ablöseschicht angeordnet ist. Diese sorgt dafür, dass ein sicheres Ablösen der Transferlage von der Trägerfolie sichergestellt werden kann. Ferner kann eine zu starke Anhaftung zwischen dem Topcoat und der Masterstruktur bzw. dem Strukturlack dadurch verhindert werden, dass die Masterstruktur bzw. der Strukturlack entsprechende Additive, wie Silikone, aliphatische Kohlenwasserstoffe etc. aufweist. Es ist aber auch möglich, dass der Topcoat entsprechende Additive, wie beispielsweise Silikone, aliphatische Kohlenwasserstoffe etc. aufweist.

Um die Transferfolie gut verarbeiten zu können, insbesondere in klassischen Dekorationsverfahren wie beispielsweise dem Hubprägen, dem Abrollen oder auch dem IMD-Verfahren, liegt die Trennkraft zwischen Topcoat und Masterstruktur bzw. dem Strukturlack bevorzugt zwischen 3N/m und 40 N/m, insbesondere bevorzugt zwischen 10 N/m und 30 N/m. Hierdurch kann insgesamt ein leichtes und sicheres Ablösen der Transferlage gewährleistet werden. Hierzu wird insbesondere die Transferlage mit einer Breite von 35 mm und einer Länge von 150 mm auf eine ABS-Platte bei 180 °C und einer Geschwindigkeit von 13 m/min abgeprägt. Die Ablösekraftmessung findet dabei bevorzugt auf einer Zugprüfmaschine Zwick/Roell Z 1.0 bei Raumtemperatur (20°C) statt. Hierzu wird die Transferlage insbesondere in einem Winkel von 90° und einem Messweg von 150 mm von der ABS-Platte abgezogen, wobei die Ablösekraft ermittelt wird.

Die Ablöseschicht weist bevorzugt eine Schichtdicke von 0,001 µm bis 2 µm, insbesondere von 0,05 µm bis 1 µm, auf. Die Ablöseschicht kann aus einem Wachs bestehen bzw. ein Wachs aufweisen. Dies kann z. B. ein Carnaubawachs, ein Montansäureester, ein Polyethylenwachs, ein Polyamidwachs oder ein PTFE-Wachs sein. Des Weiteren sind aber auch oberflächenaktive Substanzen wie Silikone als Ablöseschicht geeignet. Auch können dünne Schichten aus Melaminformaldehydharz-vernetzten Lacken als Ablöseschicht dienen.

Vorteilhafterweise ist auf der der Trägerfolie abgewandten Seite des Topcoats eine Vermittlungsschicht, insbesondere eine Haftvermittlungsschicht bzw. ein Haftvermittler, angeordnet. Die Vermittlungsschicht sorgt insbesondere dafür, dass zwischen dem Topcoat und den anderen Schichten der Transferlage eine sehr gute Haftung herstellt wird. Zudem dient die Vermittlungsschicht insbesondere als Barriereschicht. Sie verhindert, dass von außen in den Topcoat eindringende Stoffe nicht in die anderen Schichten der Transferlage eindringen können.

Bevorzugt weist die Vermittlungsschicht vernetzbare Acrylate, insbesondere Polyacrylate, Polyesterharze, Alkydharze sowie deren Modifikationen, Aminoharze, Amidoharze oder Phenolharze, auf. Als Vernetzerkomponente kann Isocyanat zum Einsatz kommen. Es sind hier grundsätzlich alle gängigen Vernetzungen denkbar. Eine UV-Vernetzung wie auch ein Dualcuresystem, also insbesondere eine Vernetzung auf Basis von externer Strahlungsenergie und zusätzlich auf Basis von chemischen Reaktionen kann zur Anwendung kommen.

Idealerweise weist die Vermittlungsschicht eine Schichtdicke zwischen 0,1 µm und 10 µm, bevorzugt zwischen 0,5 µm und 5 µm, besonders bevorzugt zwischen 0,3 µm und 4 µm, auf.

Ferner kann die Transferfolie, insbesondere die Transferlage, eine Dekorschicht, insbesondere mindestens eine Farbschicht und/oder mindestens eine Metallisierung und/oder mindestens eine Kleberschicht bzw. eine Grundierung aufweisen. Die Schichten können dabei vollflächig wie auch nur partiell bzw. bereichsweise aufgebracht sein.

Die Dekorschicht kann eine oder mehrere partielle oder vollflächige Farbschichten zur Erzeugung eines Musters und/oder eines Motivs aufweisen. Die Farbschichten können insbesondere auch im Register zu den partiellen Bereichen des Soft-Touch-Lacks mit ihren unterschiedlichen optischen Eigenschaften insbesondere hinsichtlich Reflexion, Absorption und/oder Brechungsindex stehen. Die Schichtdicke der Dekorschicht beträgt bevorzugt 0,1 µm bis 10 µm, insbesondere 0,5 µm bis 5 µm.

Unter Register oder Passer bzw. Registergenauigkeit oder Passergenauigkeit ist eine Lagegenauigkeit zweier oder mehrerer Elemente und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorischer, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Die Dekorschicht kann eine Replikationsschicht aufweisen, in die diffraktiv und/oder refraktiv wirkende Mikro- oder Makrostrukturen eingeformt sind. Bevorzugt ist diese Replikationsschicht mit einer Reflexionsschicht versehen, die aus einer Metallisierung und/oder einer HRI-Schicht mit hohem Brechungsindex (HRI = High Refractive Index) bestehen kann. Die Reflexionsschicht kann dabei opak, semitransparent oder transparent sein.

In der Replikationsschicht können ein oder mehrere der folgenden Strukturen eingeformt sein: eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur.

Die Strukturen in der Replikationsschicht können ein Muster und/oder ein Motiv darstellen, welches insbesondere auch im Register zu den Farbschichten der Dekorschicht und/oder im Register zu den partiellen Bereichen des Soft-Touch-Lacks angeordnet sein kann.

Die Metallisierung wird bevorzugt mittels Bedampfung hergestellt. Als Metall eignen sich insbesondere Cr, Sn und/oder Al. Durch die Verwendung einer Schicht aus Metall erhält man eine Softtouchfolie mit Metalloptik. Die aufgedampfte Metallisierung kann vollflächig erfolgen und wahlweise vollflächig erhalten bleiben oder aber mit bekannten Demetallisierungsverfahren wie Ätzen, Lift-Off oder Photolithografie strukturiert werden und dadurch nur partiell vorliegen. Die Metallisierung kann aber auch aus einer gedruckten Schicht aus Metallpigmenten in einem Bindemittel bestehen. Diese gedruckten Metallpigmente können vollflächig oder partiell aufgebracht sein und in unterschiedlichen Flächenbereichen unterschiedliche Einfärbungen aufweisen. Die Metallisierung kann ein Muster und/oder ein Motiv darstellen, welches insbesondere auch im Register zu den Farbschichten der Dekorschicht und/oder zu den Strukturen der Replikationsschicht und/oder im Register zu den partiellen Bereichen des Soft-Touch-Lacks angeordnet sein kann.

Die Kleberschicht bzw. die Grundierung sorgt insbesondere dafür, dass zwischen der Transferfolie bzw. zwischen der Transferlage der Transferfolie und einer Kunststoffspritzmasse bzw. einem Kunststoffkörper eine gute Haftung besteht.

Die Kleberschicht bzw. die Grundierung weist bevorzugt eine Schichtdicke von 0,1 µm bis 10 µm, insbesondere von 0,1 µm bis 3 µm, auf und kann auch mehrere Teilschichten aufweisen.

Vorteilhafterweise ist auf der dem Topcoat abweisenden Seite der Trägerschicht bzw. auf der dem Topcoat abweisenden Seite des Strukturlacks zumindest bereichsweise ein Haptiklack angeordnet. Im Sinne der Erfindung ist unter Haptiklack insbesondere ein Lack zu verstehen, der zu einer räumlichen Tiefen-Strukturierung bzw. Verformung der Folie führt. Hierfür ist der Haptiklack im Wesentlichen formstabil. Durch die äußere Krafteinwirkung drückt sich der Haptiklack in die weichere, verformbare Trägerschicht und/oder den weicheren, verformbaren Strukturlack ein, wodurch dieser seine Negativform einformt. Wird eine Folie mit einem solchen Haptiklack weiterverarbeitet, beispielsweise in einem IMD-Verfahren oder beim Heißprägen, dann verformt sich der Haptiklack nicht beziehungsweise nur unwesentlich. Der Einsatz einer Transferfolie mit Haptiklack zum IMD-Verfahren oder zum Heißpressen ermöglicht die Ausbildung räumlicher Tiefen-Strukturen auf der Transferlage auf einem mit einer solchen Transferlage dekorierten Spritzgussartikel. Hierdurch kann zusätzlich zu dem Soft-Touch-Effekt partiell oder vollflächig eine ebenfalls haptisch bzw. taktil und auch optisch wahrnehmbare Reliefstruktur erzeugt werden. Der Haptiklack kann dabei insbesondere auch im Register zu den partiellen Bereichen des Soft-Touch-Lacks und/oder zu den Farbschichten der Dekorschicht und/oder zu den Strukturen der Replikationsschicht und/oder im Register zu den partiellen Bereichen der Metallisierung angeordnet sein.

Der Haptiklack weist bevorzugt eine Schichtdicke zwischen 1 µm und 500 µm, insbesondere zwischen 5 µm und 100 µm, auf.

Für die erzeugbare Tiefe der räumlichen Strukturierung ist die Schichtdicke des Haptiklacks maßgebend. Um eine haptisch erfassbare, räumliche Strukturierung zu erzielen, ist ein Haptiklack insbesondere von mindestens 5 µm, bevorzugt mindestens 10 µm Dicke erforderlich, der sich unter den Verarbeitungsbedingungen für die Transferfolie nicht oder nur gering deformieren lässt. Die Dicke des Haptiklacks auf einer Trägerfolie kann dabei unterschiedlich ausgebildet werden, so dass gleichzeitig räumliche Strukturen unterschiedlicher Tiefe erzeugt werden können.

Besonders bewährt hat es sich, wenn der Haptiklack einen Duroplasten oder einen Thermoplasten mit einer Glasübergangstemperatur Tg oberhalb von 200°C aufweist. Aber auch der Einsatz eines Haptiklacks aus einem mit einem Füllstoff gefüllten, nicht vernetzenden Lacksystem, wobei der Füllstoff bevorzugt aus anorganischen Füllstoffen wie beispielsweise Titandioxid gebildet ist, hat sich bewährt. Derartige Haptiklacke sind bis zu hohen Temperaturen formstabil und druckfest, so dass eine Deformation der Strukturschicht unter Spritzbedingungen nicht oder nur in äußerst geringem Maßstab erfolgt.

Ferner hat sich insbesondere bewährt, wenn der Haptiklack ein strahlungshärtbarer, beispielsweise UV-härtbarer oder ein Elektronenstrahl-härtbarer oder ein Epoxyhärtbarer oder ein Isocyanat-härtbarer oder säurehärtbarer Lack ist. Derartige vernetzende Lacke weisen die geforderte Form- und Druckstabilität bei hohen Verarbeitungstemperaturen auf und sind auch bei hohem Festkörpergehalt gut verarbeitbar.

Besonders bevorzugt ist es dabei, wenn der Haptiklack einen Festkörpergehalt von mindestens 40 %, vorzugsweise von 100 % aufweist. Der hohe Festkörpergehalt erhöht die erzielbare Schichtdicke des Haptiklacks und verbessert die Transkriptionsfähigkeit des Haptiklacks. Somit wird die erzielbare Tiefe der räumlichen Strukturen erhöht.

Es hat sich als vorteilhaft erwiesen, wenn der Haptiklack unterschiedlich zur Trägerfolie bzw. Trägerschicht eingefärbt ist. Dies ermöglicht eine optische Überprüfung des Haptiklacks, beispielsweise im Hinblick auf seine Vollständigkeit, sowie eine einfachere und genauere, auch automatische, Positionierung der Transferfolie im gewählten Verarbeitungsverfahren.

Vorteilhaft ist es, wenn die Masterreliefstruktur durch das Aufbringen des Strukturlacks auf die Trägerschicht, erzeugt wird. Das Aufbringen des Strukturlacks auf die Trägerschicht erfolgt bevorzugt in einem zusätzlichen Prozessschritt. Der Strukturlack kann aufgedruckt werden, insbesondere in einer Auflösung von bis zu 150 µm. Der Strukturlack kann vollflächig wie auch partiell bzw. im Dekor auf die Trägerschicht aufgebracht werden. Grundsätzlich ist auch denkbar, dass der Strukturlack in einem ersten Schritt vollflächig auf die Trägerschicht aufgebracht wird und in einem weiteren Schritt mittels Ätzens bereichsweise wieder entfernt wird.

Ist der Strukturlack nur bereichsweise auf der Trägerschicht angeordnet, dann ist es von Vorteil, wenn in Bereichen auf der Trägerschicht, wo kein Strukturlack angeordnet ist, wenigstens bereichsweise ein weiterer Lack, insbesondere ein Lack mit einer nicht erhabenen Oberfläche, bevorzugt mit einer glatten und/oder glänzenden Oberfläche, aufgebracht wird.

Vorteilhafterweise wird auf eine glänzende Trägerschicht ein schwach mattierter Strukturlack aufgebracht, insbesondere aufgedruckt. Es ist aber auch möglich, dass auf eine bereits schwach mattierte Trägerschicht ein noch stärker mattierter Strukturlack aufgebracht wird. Hierdurch resultiert, insbesondere ab einem optisch wahrnehmbaren Glanzunterschied von 2, gemessen bei 60° Messwinkel mit Messgerät micro-gloss von Byk-Gardener, ein optischer Effekt. Der Glanzeffekt kann vorteilhafterweise nach Aspekten des Designs und/oder der Funktionalität angepasst werden und/oder ist frei wählbar.

Um die Haftung zwischen Trägerschicht und Strukturlack zu verbessern, kann die Trägerschicht vorbehandelt werden. Hierdurch wird sichergestellt, dass der Strukturlack zusammen mit der Trägerschicht, insbesondere nach einem IMD-Prozess, von der übertragenen Transferlage zu 100% wieder sicher entfernt werden kann. Dies kann insbesondere durch die Vorbehandlung der Trägerschicht erreicht werden. Hierzu eignen sich Verfahren wie die Koronabehandlung, die UV-LichtBestrahlung sowie die Beflammung.

Vorteilhaft ist es, wenn der Topcoat mittels UV-Härtung oder thermisch während der Herstellung der Transferfolie ausgehärtet wird.

Die weiteren Schichten der Transferlage, insbesondere die Vermittlungsschicht bzw. der Haftvermittler, die Dekorschicht, bevorzugt die Farbschicht, und/oder die Kleberschicht bzw. die Grundierung werden vorteilhafterweise mittels Drucken auf den Topcoat aufgebracht. Das Aufbringen der Metallisierung erfolgt insbesondere mittels Bedampfung.

Kommt die erfindungsgemäße Transferfolie in einem Verfahren, insbesondere in einem IMD-Verfahren, zur Herstellung eines mit der Transferlage der Transferfolie dekorierten Spritzgussartikels, zum Einsatz, dann ist es vorteilhaft, wenn der Topcoat schon während der Herstellung der Transferfolie, insbesondere mittels UV-Härtung und/oder thermisch, ausgehärtet wird. Es ist aber auch möglich, dass die Aushärtung des Topcoats als Postcurefolie durchgeführt wird. Im Sinne der Erfindung wird unter Aushärtung des Topcoats als Postcurefolie insbesondere eine UV-Härtung nach der Verarbeitung, insbesondere der Umformung auf einem Spritzgussartikel verstanden.

Die Verwendung der Transferfolie als Soft-Touch-Folie hat sich als ideal herausgestellt. Ferner hat sich die Verwendung der erfindungsgemäßen Transferfolie als IMD-Folie als ausgezeichnet herausgestellt. Auch die Verwendung der erfindungsgemäßen Transferfolie zur Herstellung eines mit der Transferlage dekorierten Spritzgussartikels, der im Bereich der Übertragungslage ein Softtoucheffekt aufweist, ist ideal. Die Transferfolie mit der fertigen Soft-Touch-Beschichtung bzw. Soft-Touch-Oberfläche wird in ein Spritzgusswerkzeug eingeführt und dann hinterspritzt.

Derartig dekorierte Spritzgussartikel werden bevorzugt als Dekorbauelemente für Kraftfahrzeuge, für Schiffe, für Flugzeuge oder auch in Telekommunikationsgeräten oder Haushaltsgeräten verwendet.

Im Folgenden wird die Erfindung anhand von mehreren Ausführungsbeispielen unter Zuhilfenahme der beiliegenden Zeichnungen beispielhaft erläutert. Dabei zeigen:
- Fig. 1: eine schematische Schnittdarstellung einer Transferfolie.
- Fig. 2: eine schematische Schnittdarstellung einer weiteren Transferfolie.
- Fig. 3: eine schematische Schnittdarstellung einer weiteren Transferfolie.
- Fig. 4: eine schematische Schnittdarstellung einer weiteren Transferfolie.
- Fig. 5: eine schematische Schnittdarstellung einer weiteren Transferfolie.
- Fig. 6: eine schematische Schnittdarstellung einer weiteren Transferfolie.
- Fig. 7: eine schematische Schnittdarstellung eines mit einer Transferlage dekorierten Spritzgussartikels.

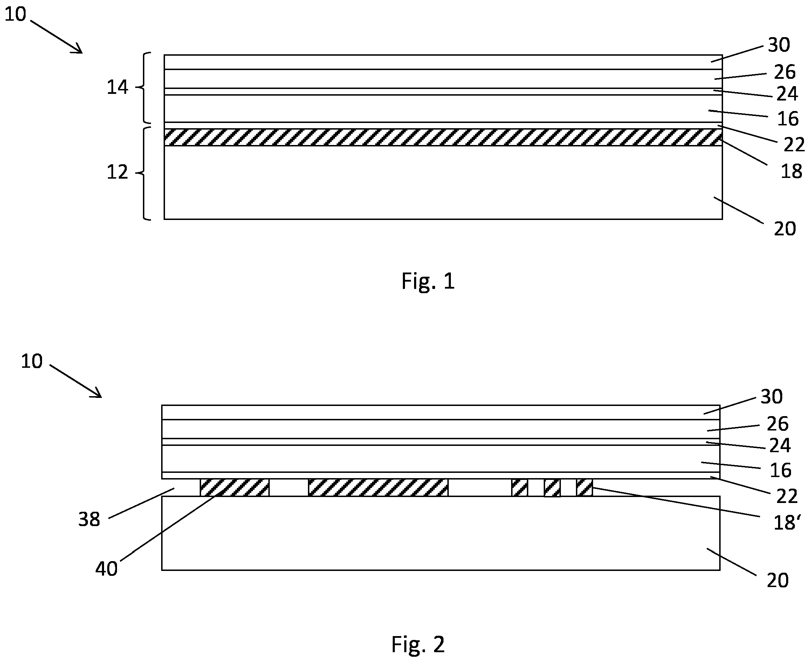

Figur 1 zeigt eine schematische Schnittdarstellung einer Transferfolie 10. Die Transferfolie 10, insbesondere Heißprägefolie, weist eine Trägerfolie 12 und eine auf der Trägerfolie 12 angeordnete und von der Trägerfolie 12 ablösbare Transferlage 14 auf. Die Transferlage 14 umfasst einen Topcoat 16. Auf der Trägerfolie 12 ist auf ihrer der Transferlage 14 zugewandten Seite eine Masterstruktur abgeformt, wobei der Topcoat 16 eine Strukturierung umfasst, die eine zur Masterstruktur komplementäre Struktur aufweist. Von Vorteil ist es, wenn ein Strukturlack 18 die Masterstruktur aufweist.

Die in den Topcoat 16 eingebrachte Struktur sorgt insbesondere für den Soft-Touch-Effekt der Transferfolie 10. Je nach Strukturierung der Oberfläche des Topcoats 16 mittels der Masterstruktur können die funktionalen Eigenschaften des Topcoats 16 gesteuert werden, wodurch sich insbesondere die taktil bzw. haptisch fühlbaren Eigenschaften der Oberfläche, die Fingerprintempfindlichkeit, schmutzabweisende und/oder flüssigkeitsabweisende Funktionen und/oder der Grad der Mattierung steuern lassen.

Die in Figur 1 gezeigte Trägerfolie 12 weist bevorzugt eine Trägerschicht 20 und den auf der Trägerschicht 20 in Richtung der Transferlage 14 angeordneten Strukturlack 18 auf. Die Trägerschicht 20 ist bevorzugt aus ABS, ABS/PC, PET, PC, PMMA, PE und/oder PPP ausgebildet. Die Schichtdicke der Trägerschicht 20 liegt vorteilhafterweise zwischen 5 µm und 500 µm, insbesondere zwischen 6 µm und 100 µm.

Der Strukturlack 18 ist in Figur 1 vollflächig auf der Trägerschicht 20 angeordnet. Vorteilhafterweise ist der Strukturlack 18 aus Melamin, Polyurethan (PU), Polyacrylate, Polyol, Isocyanat und/oder Polyvinylchlorid ausgebildet.

Idealerweise weist der Strukturlack 18 eine Schichtdicke von 0,1 µm bis 10 µm, insbesondere von 0,5 µm bis 7 µm, auf. Von Vorteil ist es, wenn der Strukturlack 18 eine Strukturtiefe zwischen 1 µm und 10 µm, bevorzugt zwischen 2 µm und 4µm, insbesondere zwischen 3 µm und 4 µm, auf. Durch eine derartige Strukturtiefe kann ein besonders guter Soft-Touch-Effekt des Topcoats 16 erreicht werden. Es ist aber auch möglich, dass die Strukturtiefen größer sind. Dies wird bevorzugt dadurch erreicht, dass die Masterstruktur bzw. der Strukturlack 18 größere Teilchen bzw. Partikel aufweist. Durch die Auswahl von Teilchen bzw. Partikeln mit entsprechender Größe lässt sich die Strukturtiefe der Masterstruktur bzw. des Strukturlacks 18 an den jeweiligen Einsatz bestmöglich anpassen. Erfindungsgemäß weist die Masterstruktur bzw. der Strukturlack 18 Füllstoffe auf, wobei 50 % bis 80 % der strukturgebenden Teilchen zwischen 2 µm und 4 µm groß sind, und die restlichen 20 % bis 50 % der Teilchen zwischen 6 µm und 15 µm groß sind.

Vorteilhafterweise ist der Topcoat 16 aus langkettigen Polymeren ausgebildet. Die Polymere können vernetzt ausgebildet sein. Die Vernetzung basiert bevorzugt auf UV-Härtung und/oder auf chemischen Reaktionen. Der Topcoat 16 ist aus Copolymeren aus Polyurethan (PU) und Polyol und/oder Copolymere aus Polyurethan (PU) und Polyacrylate ausgebildet.

Die Schichtdicke des Topcoats 16 liegt vorteilhafterweise zwischen 0,5 µm und 100 µm, insbesondere zwischen 0,2 µm 50 µm, besonders bevorzugt zwischen 5 µm und 30 µm.

Der Topcoat 16, insbesondere die Bindemittelmatrix des Topcoats 16, kann Füllstoffe, bevorzugt kugelförmige Füllstoffe aus PMMA, Silikone, Polyurethane (PU), verschiedene Copolymere und/oder Mineralstoffe, aufweisen. Ferner kann der Topcoat 16, insbesondere die Bindemittelmatrix des Topcoats 16, silikonhaltige Acrylate, silikonhaltige Polyurethane, Öle, Wachse und/oder Wachsdispersionen aufweisen. Durch den Einsatz von derartigen Additiven bzw. Füllstoffen kann die Elastizität des Topcoats 16 und die damit verbundenen taktilen bzw. haptischen Eigenschaften, als das sogenannte "Feel" verstärkt werden.

Vorteilhafterweise weist der Topcoat 16 Silikone auf. Durch die Verwendung von Silikonen kann die Kratzbeständigkeit, der Griff sowie die Oberflächengüte des Topcoats 16 verbessert werden. Des Weiteren lässt sich durch den Einsatz von Silikon die Ablöseeigenschaften zwischen Topcoat 16 und Strukturlack 18 steuern.

Idealerweise verfügt der Topcoat 16 über eine Dehnung von mindestens 50 %, bevorzugt von mindestens 100 %, insbesondere bevorzugt von mindestens 200 %. Hierdurch wird ein umformfähiger Topcoat 16 ermöglicht. Durch ein derartiges Dehnungsverhalten des Topcoats 16 eignet sich die Transferfolie 10 besonders gut zur Verwendung im IMD-Verfahren.

Bevorzugt ist zwischen dem Topcoat 16 und dem Strukturlack 18 eine Ablöseschicht 22 angeordnet. Die Ablöseschicht 22 sorgt für ein sicheres Ablösen der Transferlage 14 von der Trägerfolie 12, indem sie eine zu starke Anhaftung zwischen dem Topcoat 16 und dem Strukturlack 18 verhindern. Anstelle oder zusätzlich zu einer Ablöseschicht 22 ist es von Vorteil, wenn der Strukturlack 18 und/oder der Topcoat 16 Additive, wie beispielsweise Silikone, aliphatische Kohlenwasserstoffe etc. aufweisen, die die Haftung zwischen Topcoat 16 und Strukturlack 18 vermindern.

Die Ablöseschicht 22 weist bevorzugt eine Schichtdicke von 0,001 µm bis 2 µm, insbesondere von 0,05 µm bis 1 µm, auf. Die Ablöseschicht 22 kann aus einem Wachs bestehen bzw. ein Wachs aufweisen. Dies kann z. B. ein Carnaubawachs, ein Montansäureester, ein Polyethylenwachs, ein Polyamidwachs oder ein PTFE-Wachs sein. Des Weiteren sind aber auch oberflächenaktive Substanzen wie Silikone als Ablöseschicht 22 geeignet. Auch können dünne Schichten aus Melaminformaldehydharz-vernetzten Lacken als Ablöseschicht 22 dienen.

Vorteilhafterweise ist auf der der Trägerfolie 12 abgewandten Seite des Topcoats 16 eine Vermittlungsschicht 24, insbesondere ein Haftvermittler, angeordnet. Die Vermittlungsschicht 24 sorgt insbesondere dafür, dass zwischen dem Topcoat 16 und den anderen Schichten der Transferlage 14 eine sehr gute Haftung herstellt wird. Zudem dient die Vermittlungsschicht 24 vorteilhafterweise als Barriereschicht. Sie verhindert insbesondere, dass von außen in den Topcoat 16 eindringende Stoffe nicht in die anderen Schichten der Transferlage 14 eindringen können.

Bevorzugt weist die Vermittlungsschicht 24 vernetzbare Acrylate, insbesondere Polyacrylate, Polyesterharze, Alkydharze sowie deren Modifikationen, Aminoharze, Amidoharze oder Phenolharze, auf. Als Vernetzerkomponente kann Isocyanat zum Einsatz kommen. Es sind hier grundsätzlich alle gängigen Vernetzungen denkbar. Eine UV-Vernetzung wie auch ein Dualcuresystem, also insbesondere eine Vernetzung auf Basis von externer Strahlungsenergie und zusätzlich auf Basis von chemischen Reaktionen kann zur Anwendung kommen.

Idealerweise weist die Vermittlungsschicht 24 eine Schichtdicke zwischen 0,1 µm und 10 µm, bevorzugt zwischen 0,5 µm und 5 µm, besonders bevorzugt zwischen 0,3 µm und 4 µm, auf.

Ferner weist die Transferfolie 10, insbesondere die Transferlage 14, bevorzugt eine Dekorschicht 26 auf. Bei der Dekorschicht 26 handelt es sich insbesondere um eine Farbschicht. Die Schichtdicke der Dekorschicht 26 beträgt bevorzugt 0,1 µm bis 10 µm, insbesondere 0,5 µm bis 5 µm. Die Dekorschicht 26 ist vollflächig ausgebildet. Es ist aber auch denkbar, dass die Dekorschicht 26 nur partiell bzw. bereichsweise aufgebracht ist.

Die Dekorschicht 26 kann eine oder mehrere partielle oder vollflächige Farbschichten zur Erzeugung eines Musters und/oder eines Motivs aufweisen, die insbesondere auch im Register zu den partiellen Bereichen des Soft-Touch-Lacks mit ihren unterschiedlichen optischen Eigenschaften insbesondere hinsichtlich Reflexion, Absorption und/oder Brechungsindex aufweisen. Die Schichtdicke der Dekorschicht 26beträgt bevorzugt 0,1 µm bis 10 µm, insbesondere 0,5 µm bis 5 µm.

Die Dekorschicht 26 kann eine Replikationsschicht aufweisen, in die diffraktiv und/oder refraktiv wirkende Mikro- oder Makrostrukturen eingeformt sind. Bevorzugt ist diese Replikationsschicht mit einer Reflexionsschicht versehen, die aus einer Metallisierung 28 und/oder einer HRI-Schicht mit hohem Brechungsindex (HRI = High Refractive Index) bestehen kann. Die Reflexionsschicht kann dabei opak, semitransparent oder transparent sein.

In der Replikationsschicht können ein oder mehrere der folgenden Strukturen eingeformt sein: eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur.

Die Strukturen in der Replikationsschicht können ein Muster und/oder ein Motiv darstellen, welches insbesondere auch im Register zu den Farbschichten der Dekorschicht 26 und/oder im Register zu den partiellen Bereichen des Soft-Touch-Lacks angeordnet sein kann.

Die Metallisierung 28 wird bevorzugt mittels Bedampfung hergestellt. Als Metall eignen sich insbesondere Cr, Sn und/oder Al. Durch die Verwendung einer Schicht aus Metall erhält man eine Softtouchfolie mit Metalloptik. Die aufgedampfte Metallisierung 28 kann vollflächig erfolgen und wahlweise vollflächig erhalten bleiben oder aber mit bekannten Demetallisierungsverfahren wie Ätzen, Lift-Off oder Photolithografie strukturiert werden und dadurch nur partiell vorliegen. Die Metallisierung 28 kann auch aus einer gedruckten Schicht aus Metallpigmenten in einem Bindemittel bestehen. Diese gedruckten Metallpigmente können vollflächig oder partiell aufgebracht sein und in unterschiedlichen Flächenbereichen unterschiedliche Einfärbungen aufweisen. Die Metallisierung 28 kann ein Muster und/oder ein Motiv darstellen, welches insbesondere auch im Register zu den Farbschichten der Dekorschicht 26 und/oder zu den Strukturen der Replikationsschicht und/oder im Register zu den partiellen Bereichen des Soft-Touch-Lacks angeordnet sein kann.

Des Weiteren weist die Transferfolie 10, insbesondere die Transferlage 14, bevorzugt eine Kleberschicht 30 bzw. eine Grundierung auf. Die Kleberschicht 30 bzw. die Grundierung sorgt insbesondere dafür, dass zwischen der Transferfolie 10 bzw. zwischen der Transferlage 14 der Transferfolie 10 und einer Kunststoffspritzmasse 36 bzw. einem Kunststoffkörper eine gute Haftung besteht. Die Kleberschicht 30 kann dabei vollflächig als auch nur partiell bzw. bereichsweise aufgebracht sein. Die Kleberschicht 30 bzw. die Grundierung weist bevorzugt eine Schichtdicke von 0,1 µm bis 10 µm, insbesondere von 0,1 µm bis 3 µm, auf.

Figur 2 zeigt eine schematische Schnittdarstellung einer weiteren Transferfolie 10. In Figur 2 ist der Strukturlack 18' partiell, also bereichsweise, auf der Trägerschicht 20 angeordnet. Idealerweise ist der Strukturlack 18' im Dekor auf der Trägerschicht 20 angeordnet. Durch die lediglich bereichsweise Anordnung des Strukturlacks 18' auf der Trägerschicht 20 können insbesondere Oberflächenbereiche mit unterschiedlichen Glanzgraden bzw. unterschiedlichen Mattierungen realisiert werden. Dabei liegt der Glanzgrad des Topcoats zwischen 20 und 60.

Die verschiedenen Oberflächenbereiche zeichnen sich neben den unterschiedlichen optischen Eigenschaften insbesondere hinsichtlich Reflexion, Absorption und/oder Brechungsindex, insbesondere durch unterschiedliche Reibung und unterschiedliche taktile Eigenschaften aus.

Ist der Strukturlack 18' im Dekor bzw. bereichsweise auf der Trägerschicht 20 angeordnet, dann liegen bevorzugt Bereiche 40 vor, die matt wirken, nämlich insbesondere diejenigen Bereiche, in denen sich der Strukturlack 18' befindet, und es liegen Bereiche 38 vor, die glänzend bleiben. Bei den glänzenden Bereichen 38 kann es sich um die Oberfläche der Trägerschicht 20 handeln. Es ist aber auch möglich, dass in denjenigen Bereichen, wo kein Strukturlack 18' vorhanden ist, eine weitere Lackschicht auf die Trägerschicht 20, insbesondere ein glatter Lack, aufgebracht ist.

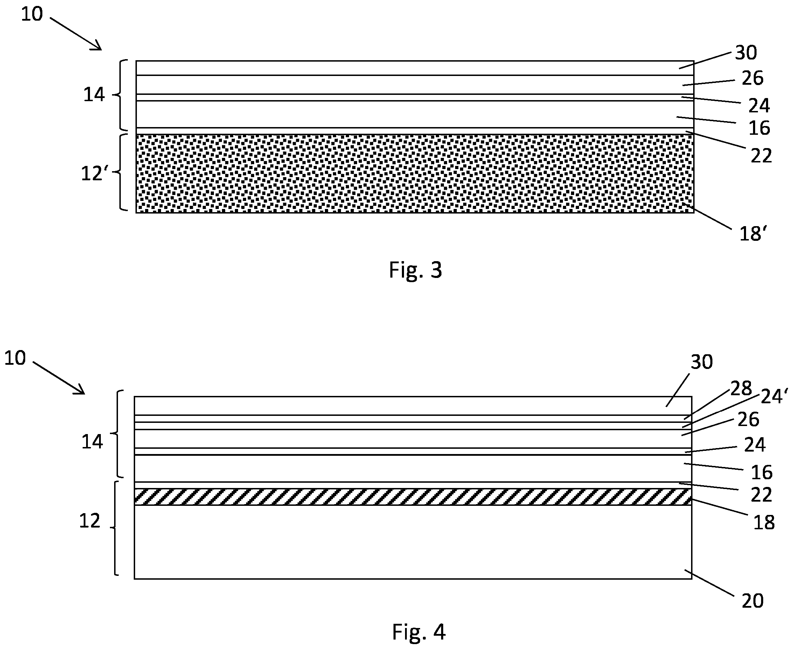

Figur 3 zeigt eine schematische Schnittdarstellung einer weiteren Transferfolie 10. Die in Figur 3 gezeigte Trägerfolie 12' besteht aus dem Strukturlack 18'. Es handelt sich hierbei bevorzugt um einen selbsttragenden Strukturlack 18'. Der Strukturlack 18' ist bevorzugt aus Silikon ausgebildet. Der Strukturlack 18' weist vorteilhafterweise eine Shore A-Härte von 10 bis 50 auf.

Die Dicke des selbsttragenden Strukturlacks 18' liegt bevorzugt zwischen 10 µm und 5000 µm, insbesondere zwischen 10 µm und 500 µm, insbesondere bevorzugt zwischen 10 µm und 250 µm. Vorteilhafterweise wird die Masterstruktur mittels Prägen in den Strukturlack 18' eingebracht.

Die in Figur 3 gezeigte Transferlage 14 entspricht im Wesentlichen der in Figur 1 gezeigten Transferlage 14.

Figur 4 zeigt eine schematische Schnittdarstellung einer weiteren Transferfolie 10. Die Transferlage 14 der Transferfolie 10 weist eine Metallisierung 28 auf. Die Metallisierung 28 wird bevorzugt mittels Bedampfung hergestellt. Als Metall eignen sich insbesondere Cr, Sn und/oder Al. Durch die Verwendung einer Schicht aus Metall erhält man insbesondere eine Softtouchfolie mit Metalloptik. Die Metallisierung 28 ist in Figur 4 vollflächig ausgebildet. Es ist aber auch möglich, dass die Metallisierung 28 nur bereichsweise, insbesondere im Dekor, angeordnet ist.

Um eine gute Haftung zwischen der Metallisierung 28 und der Dekorschicht 26 zu erhalten, ist zwischen diesen Schichten ein Haftvermittler 24' angeordnet.

Die in Figur 4 dargestellte Trägerfolie 12 entspricht im Wesentlichen der in Figur 1 dargestellten Trägerfolie 12. Sie weist eine Trägerschicht 20 und einen vollflächig darauf angeordneten Strukturlack 18 auf. Der Strukturlack 18 kann aber auch nur im Dekor auf der Trägerschicht 20 angeordnet sein.

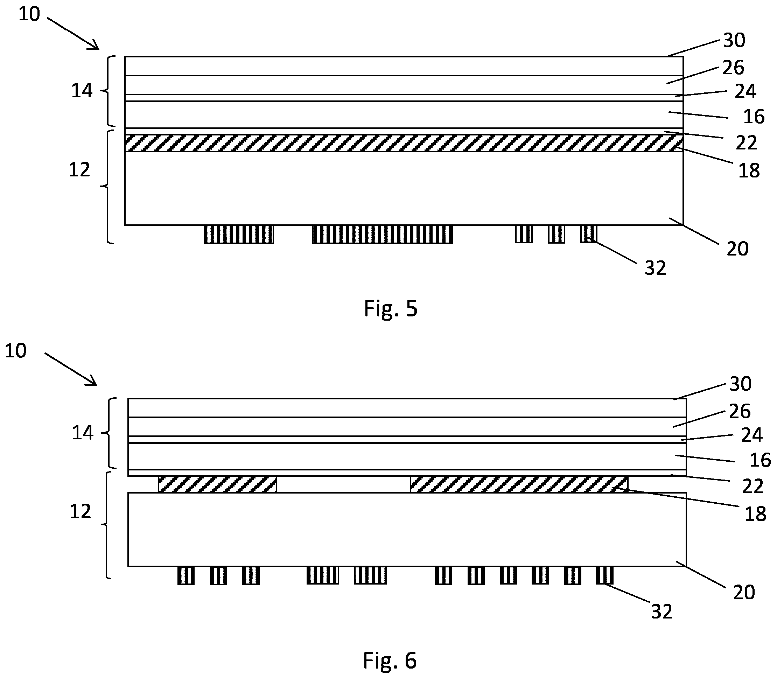

Figur 5 und 6 zeigen jeweils eine schematische Schnittdarstellung einer weiteren Transferfolie 10, wobei auf der der Topcoat 16 abweisenden Seite der Trägerschicht 20 wenigstens bereichsweise ein Haptiklack 32 angeordnet ist. Haptiklack 32 weist im Wesentlichen eine Formstabilität auf. Wird eine Folie mit einem Haptiklack 32 weiterverarbeitet, beispielsweise in einem IMD-Verfahren oder beim Heißprägen, dann verformt sich der Haptiklack 32 nicht beziehungsweise nur unwesentlich. Der Einsatz einer Transferfolie 10 mit Haptiklack 32 zum IMD oder Heißpressen ermöglicht die Ausbildung räumlicher Strukturen im Bereich der Transferlage 14 auf einem mit einer solchen dekorierten Kunststoffartikel 34.

Der Haptiklack 32 weist bevorzugt eine Schichtdicke zwischen 1 µm und 500 µm, insbesondere zwischen 5 µm und 100 µm, auf. Um eine haptisch erfassbare, räumliche Strukturierung zu erzielen, ist ein Haptiklack 32 insbesondere von mindestens 5 µm, bevorzugt mindestens 10 µm Dicke erforderlich, der sich unter den Verarbeitungsbedingungen für die Transferfolie 10 nicht oder nur gering deformieren lässt.

Die in Figur 5 dargestellte Transferlage 14 entspricht im Wesentlichen der in Figur 1 dargestellten Transferlage 14. Die in Figur 6 dargestellte Transferlage 14 entspricht im Wesentlichen der in Figur 2 dargestellten Transferlage 14.

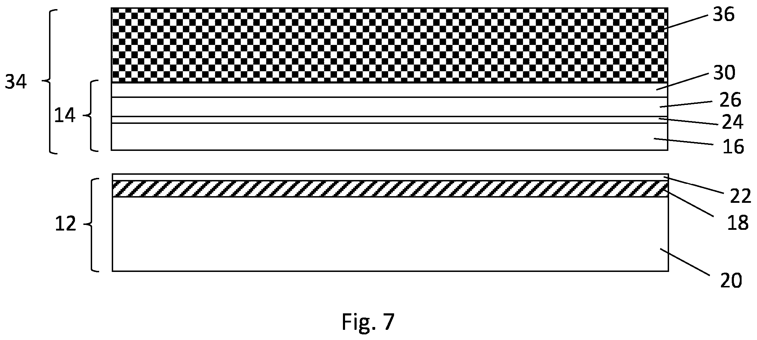

Figur 7 zeigt eine schematische Schnittdarstellung eines mit einer Transferlage 10 dekorierten Spritzgussartikels 34. Der Spritzgussartikel 34 wird bevorzugt mittels eines IMD-Verfahren hergestellt. Hierzu wird die Transferfolie 10 in eine Spritzgussform angeordnet. Danach wird die Transferfolie 10 mit einer Kunststoffspritzmasse 36 hinterspritzt. In einem weiteren Schritt wird die Trägerfolie 12 zusammen mit der Masterstruktur von der Transferlage 14 der Transferfolie 10 abgezogen. Hierdurch verbleibt der Topcoat 16 zusammen mit den weiteren Schichten auf der Kunststoffspritzmasse 36 und bildet zusammen mit dieser den Spritzgussartikel 34. Der Topcoat 16 stellt die äußere Schicht des Spritzgussartikels 34 dar. Hierdurch weist der Spritzgussartikel 34 einen Softtoucheffekt auf.

### Bezugszeichenliste

- 10: Transferfolie
- 12: Trägerfolie
- 14: Transferlage
- 16: Topcoat
- 18: Strukturlack
- 20: Trägerschicht
- 22: Ablöseschicht
- 24: Vermittlungsschicht/ Haftvermittler
- 26: Dekorschicht
- 28: Metallisierung
- 30: Kleberschicht/ Grundierung
- 32: Haptiklack
- 34: Spritzgussartikels
- 36: Kunststoffspritzmasse
- 38: glänzender Bereich
- 40: matter Bereich

## Patentansprüche

1. Transferfolie (10), insbesondere Heißprägefolie, die eine Trägerfolie (12) und eine auf der Trägerfolie (12) angeordnete und von der Trägerfolie (12) ablösbare Transferlage (14) mit einem Topcoat (16) umfasst,
wobei auf der Trägerfolie (12) auf ihrer der Transferlage (14) zugewandten Seite eine Masterstruktur abgeformt ist und wobei der Topcoat (16) eine Strukturierung umfasst, die eine zur Masterstruktur komplementäre Struktur aufweist, und wobei ein Strukturlack (18) die Masterstruktur aufweist,
wobei die Trägerfolie (12) aus dem Strukturlack (18) besteht oder wobei die Trägerfolie (12) eine Trägerschicht (20) und den auf der Trägerschicht (20) in Richtung der Transferlage (14) angeordneten Strukturlack (18) aufweist, und dass der Topcoat (16) so ausgebildet ist, dass er einen Soft-Touch-Effekt aufweist, wobei
der Strukturlack (18) strukturgebende Teilchen aufweist
**dadurch gekennzeichnet ,**
**dass** 50 % bis 80 % der strukturgebenden Teilchen zwischen 2 µm und 4 µm groß sind, wobei restlichen 20 % bis 50 % der Teilchen aus größeren Teilchen gebildet sind, deren Größe 6 µm bis 15 µm beträgt und
der Topcoat (16) aus Copolymeren aus Polyurethan und Polyol und/oder aus Copolymeren aus Polyurethan und Polyacrylaten ausgebildet ist und wobei
der Topcoat (16) einen Glanzgrad zwischen 20 und 60 aufweist.

2. Transferfolie (10) nach Anspruch 1
**dadurch gekennzeichnet ,**
**dass** die Trägerfolie (12) aus einem selbsttragenden Strukturlack (18) besteht.

3. Transferfolie (10) nach einem der vorhergegangenen Ansprüche,
**dadurch gekennzeichnet ,**
**dass** die Masterstruktur bzw. der Strukturlack (18) und/oder der Topcoat (16) wenigstens bereichsweise eine homogene Oberflächenstruktur aufweist, und/oder
**dass** die Masterstruktur bzw. der Strukturlack (18) eine Strukturtiefe von 1 µm bis 10 µm, bevorzugt zwischen 2 µm und 4µm, insbesondere zwischen 3 µm und 4 µm, aufweist, und/oder
**dass** die Masterstruktur bzw. der Strukturlack (18) eine chemische inerte Oberfläche aufweist.

4. Transferfolie (10) nach einem der vorhergegangenen Ansprüche,
**dadurch gekennzeichnet ,**
**dass** der Topcoat (16), insbesondere die Bindemittelmatrix des Topcoats (16) Füllstoffe, bevorzugt kugelförmige Füllstoffe aus PMMA, Silikone, Polyurethane, verschiedene Copolymere und/oder Mineralstoffe, aufweist, und/oder dass der Topcoat (10), insbesondere die Bindemittelmatrix des Topcoats (10) silikonhaltige Acrylate, silikonhaltige Polyurethane, Öle, Wachse und/oder Wachsdispersionen umfasst, und/oder
**dass** der Topcoat (16) UV-härtbare Komponenten aufweist.

5. Transferfolie (10) nach einem der vorhergegangenen Ansprüche,
**dadurch gekennzeichnet ,**
**dass** der Topcoat (16) Mattierungsmittel aufweist.

6. Transferfolie (10) nach einem der vorhergegangenen Ansprüche,
**dadurch gekennzeichnet ,**
**dass** der Topcoat (16) als Soft-Touch-Lack ausgebildet ist und/oder dass zwischen dem Topcoat (16) und der Masterstruktur bzw. dem Strukturlack (18) eine Ablöseschicht (22) angeordnet ist.

7. Transferfolie (10) nach einem der vorhergegangenen Ansprüche,
**dadurch gekennzeichnet ,**
**dass** auf der der Trägerfolie (12) abgewandten Seite des Topcoats (16) eine Vermittlungsschicht (24), insbesondere eine Haftvermittlungsschicht, angeordnet ist, insbesondere
wobei die Vermittlungsschicht (24) vernetzbare Acrylate, insbesondere Polyacrylate, Polyesterharze, Alkydharze sowie deren Modifikationen, Aminoharze, Amidoharze oder Phenolharze, aufweist, und/oder wobei die Vermittlungsschicht (24) eine Schichtdicke zwischen 0,1 µm und 10 µm, bevorzugt zwischen 0,5 µm und 5 µm, besonders bevorzugt zwischen 0,3 µm und 4 µm, aufweist.

8. Transferfolie (10) nach einem der vorhergegangenen Ansprüche,
**dadurch gekennzeichnet ,**
**dass** die Transferfolie (10), insbesondere die Transferlage (14), eine Dekorschicht (26), insbesondere eine Farbschicht, eine Metallisierung (28) und/oder eine Kleberschicht (30) bzw. eine Grundierung aufweist, und/oder dass auf der der Topcoat (16) abweisenden Seite der Trägerschicht (20) bzw. auf der der Topcoat (16) abweisenden Seite des Strukturlacks (18) wenigstens bereichsweise ein Haptiklack (32) angeordnet ist.

9. Verfahren zur Herstellung einer Transferfolie (10), insbesondere einer Transferfolie (10) zur Verwendung als IMD-Soft-Touch-Folie, die eine Trägerfolie (12) und eine auf der Trägerfolie (12) angeordnete und von der Trägerfolie (12) ablösbare Transferlage (14) mit einem Topcoat (16) umfasst,
wobei in die Trägerfolie (12) eine Masterstruktur, insbesondere Masterreliefstruktur, eingebracht bzw. erzeugt wird und wobei auf die Masterstruktur der Topcoat (16) aufgebracht wird, wobei in den Topcoat (16) eine zur Masterstruktur der Trägerfolie (12) komplementäre Struktur abgeformt wird, und wobei ein Strukturlack (18) die Masterstruktur aufweist,
wobei die Trägerfolie (12) aus dem Strukturlack (18) besteht oder
wobei die Trägerfolie (12) eine Trägerschicht (20) und den auf der Trägerschicht (20) in Richtung der Transferlage (14) angeordneten Strukturlack (18) aufweist, und dass der Topcoat (16) so ausgebildet ist, dass er einen Soft-Touch-Effekt aufweist, wobei der Strukturlack (18) strukturgebende Teilchen aufweist
**dadurch gekennzeichnet ,**
**dass** 50 % bis 80 % der strukturgebenden Teilchen zwischen 2 µm und 4 µm groß sind, wobei restlichen 20 % bis 50 % der Teilchen aus größeren Teilchen gebildet sind, deren Größe 6 µm bis 15 µm beträgt und
der Topcoat (16) aus Copolymeren aus Polyurethan und Polyol und/oder aus Copolymeren aus Polyurethan und Polyacrylaten ausgebildet ist und wobei der Topcoat einen Glanzgrad zwischen 20 und 60 aufweist.

10. Verwendung der Transferfolie (10) nach einem der Ansprüche 1 bis 8 als IMD-Folie.

11. Verwendung der Transferfolie (10) nach einem der Ansprüche 1 bis 8 als Soft-Touch-Folie.

12. Verfahren, insbesondere IMD-Verfahren zur Herstellung eines mit einer Transferlage (14) einer Transferfolie (10) dekorierten Spritzgussartikels (34), mit den folgenden Schritten:
- Anordnen einer Transferfolie (10) nach einem der Ansprüche 1 bis 8 in eine Spritzgussform,
- Hinterspritzen der Transferfolie (10) mit einer Kunststoffspritzmasse (36),
- Abziehen der Trägerfolie (12) zusammen mit der Masterstruktur von der Transferlage (14) der Transferfolie (10).

13. Verfahren nach Anspruch 12,
**dadurch gekennzeichnet ,**
**dass** eine UV-Härtung des Topcoats (16) nach der Verarbeitung, insbesondere der Umformung auf dem Spritzgussartikel, durchgeführt wird.

## Claims

1. Transfer film (10), in particular hot stamping film, which comprises a carrier film (12) and a transfer ply (14) arranged on the carrier film (12) and able to be detached from the carrier film (12) with a topcoat (16),
wherein a master structure is cast on the carrier film (12) on its side facing towards the transfer ply (14), and wherein the topcoat (16) comprises a structuring which has a structure complementary to the master structure, and wherein a structure lacquer (18) has the master structure,
wherein the carrier film (12) consists of the structure lacquer (18) or wherein the carrier film (12) has a carrier layer (20) and the structure lacquer (18) arranged on the carrier layer (20) in the direction of the transfer ply (14), and the topcoat (16) is formed in such a way that it has a soft touch effect, wherein
the structure lacquer (18) has structure-giving particles,
**characterised in that**
50% to 80% of the structure-giving particles are between 2 µm and 4 µm large, wherein the remaining 20% to 50% of the particles are formed from larger particles, the size of which is from 6 µm to 15 µm, and
the topcoat (16) is formed from copolymers made of polyurethane and polyol and/or from copolymers made of polyurethane and polyacrylates,
and wherein
the topcoat (16) has a gloss level of between 20 and 60.

2. Transfer film (10) according to claim 1,
**characterised in that**
the transfer film (12) consists of a self-feeding structure lacquer (18).

3. Transfer film (10) according to one of the preceding claims,
**characterised in that**
the master structure or the structure lacquer (18) and/or the topcoat (16) at least regionally has a homogenous surface structure,
and/or
the master structure or the structure lacquer (18) has a structure depth of from 1 µm to 10 µm, preferably between 2 µm and 4 µm, in particular between 3 µm and 4 µm, and/or the master structure or the structure lacquer (18) has a chemically inert surface.

4. Transfer film (10) according to one of the preceding claims,
**characterised in that**
the topcoat (16), in particular the binder matrix of the topcoat (16), has fillers, preferably spherical fillers made of PMMA, silicones, polyurethanes, various copolymers and/or minerals, and/or
the topcoat (10), in particular the binder matrix of the topcoat (10), comprises acrylates containing silicone, polyurethanes containing silicone, oils, waxes and/or wax dispersions, and/or
the topcoat (16) has UV-curable components.

5. Transfer film (10) according to one of the preceding claims,
**characterised in that**
the topcoat (16) has matting agents.

6. Transfer film (10) according to one of the preceding claims,
**characterised in that**
the topcoat (16) is formed as soft-touch lacquer and/or a detachment layer (22) is arranged between the topcoat (16) and the master structure or the structure lacquer (18).

7. Transfer film (10) according to one of the preceding claims,
**characterised in that**
a promotion layer (24), in particular an adhesion promotion layer, is arranged on the side of the topcoat (16) facing away from the carrier film (12), in particular
wherein the adhesion promotion layer (24) has crosslinkable acrylates, in particular polyacrylates, polyester resins, alkyd resins and modifications thereof, amino resins, amido resins or phenol resins, and/or
wherein the adhesion promotion layer (24) has a layer thickness of between 0.1 µm and 10 µm, preferably between 0.5 µm and 5 µm, particularly preferably between 0.3 µm and 4 µm.

8. Transfer film (10) according to one of the preceding claims,
**characterised in that**
the transfer film (10), in particular the transfer ply (14), has a decorative layer (26), in particular a coloured layer, a metallisation (28) and/or a glue layer (30) or a priming, and/or
a haptic lacquer (32) is arranged at least regionally on the side of the carrier layer (20) pointing away from the topcoat (16) or on the side of the structure lacquer (18) pointing away from the topcoat (16).

9. Method for producing a transfer film (10), in particular a transfer film (10) for use as an IMD Soft Touch film, which comprises a carrier film (12) and a transfer ply (14) arranged on the carrier film (12) and able to be detached from the carrier film (12) with a topcoat (16), wherein a master structure, in particular a master relief structure, is introduced into the carrier film (12) or generated, and wherein the topcoat (16) is applied on the master structure, wherein a structure complementary to the master structure of the carrier film (12) is cast into the topcoat (16), and wherein a structure lacquer (18) has the master structure,
wherein the carrier film (12) consists of the structure lacquer (18) or
wherein the carrier film (12) has a carrier layer (20) and the structure lacquer (18) arranged on the carrier layer (20) in the direction of the transfer ply (14), and the topcoat (16) is formed in such a way that it has a soft-touch effect, wherein the structure lacquer (18) has structure-giving particles,
**characterised in that**
50% to 80% of the structure-giving particles are between 2 µm and 4 µm large, wherein the remaining 20% to 50% of the particles are formed from larger particles, the size of which is 6 µm to 15 µm, and
the topcoat (16) is formed from copolymers made of polyurethane and polyol and/or from copolymers made of polyurethane and polyacrylates,
and wherein
the topcoat has a gloss level of between 20 and 60.

10. Use of the transfer film (10) according to one of claims 1 to 8 as an IMD film.

11. Use of the transfer film (10) according to one of claims 1 to 8 as a soft-touch film.

12. Method, in particular IMD method, for producing a decorated injection moulded article (34) decorated with a transfer ply (14) of a transfer film (10), having the following steps:
- arranging a transfer film (10) according to one of claims 1 to 8 into an injection mould,
- back-spraying the transfer film (10) with a plastic sprayed material (36),
- removing the carrier film (12) together with the master structure from the transfer ply (14) of the transfer film (10).

13. Method according to claim 12,
**characterised in that**
a UV-curing of the topcoat (16) is carried out after processing, in particular reshaping on the injection moulded article.

## Revendications

1. Film de transfert (10), en particulier film de marquage à chaud, qui comprend un film support (12) et une couche de transfert (14) disposée sur le film support (12) et détachable du film support (12) avec une couche de finition (16),
dans lequel une structure maîtresse est moulée sur le film support (12) sur son côté orienté vers la couche de transfert (14) et dans lequel la couche de finition (16) comprend une structuration qui présente une structure complémentaire à la structure maîtresse, et dans lequel un vernis structuré (18) présente la structure maîtresse,
dans lequel le film support (12) est constitué du vernis structuré (18) ou dans lequel le film support (12) présente une couche support (20) et le vernis structuré (18) disposé sur la couche support (20) en direction de la couche de transfert (14), et que la couche de finition (16) est réalisée de sorte **qu'elle** présente un effet doux au toucher, dans lequel
le vernis structuré (18) présente des particules structurantes **caractérisé en ce que** 50 % à 80 % des particules structurantes ont une taille comprise entre 2 µm et 4 µm, dans lequel les 20 % à 50 % restants des particules sont formées de particules plus grandes dont la taille est comprise entre 6 µm et 15 µm et
la couche de finition (16) est réalisée à partir de copolymères de polyuréthane et de polyol et/ou de copolymères de polyuréthane et de polyacrylates
et dans lequel
la couche de finition (16) présente un degré de brillance compris entre 20 et 60.

2. Film de transfert (10) selon la revendication 1 **caractérisé en ce**
**que** la feuille support (12) est constituée d'un vernis structuré (18) autoportant.

3. Film de transfert (10) selon l'une quelconque des revendications précédentes,
**caractérisé en ce que** la structure maîtresse ou le vernis structuré (18) et/ou la couche de finition (16) présente(nt) au moins par endroits une structure de surface homogène, et/ou
que la structure maîtresse ou le vernis structuré (18) présente une profondeur de structure de 1 µm à 10 µm, de préférence entre 2 µm et 4 µm, en particulier entre 3 µm et 4 µm, et/ou
que la structure maîtresse ou le vernis structuré (18) présente une surface inerte chimique.

4. Film de transfert (10) selon l'une quelconque des revendications précédentes,
**caractérisé en ce que** la couche de finition (16), en particulier la matrice de liant de la couche de finition (16), présente des charges, de préférence des charges sphériques en PMMA, silicones, polyuréthanes, divers copolymères et/ou substances minérales, et/ou
que la couche de finition (10), en particulier la matrice de liant de la couche de finition (10) comprend des acrylates contenant du silicone, des polyuréthanes contenant du silicone, des huiles, des cires et/ou des dispersions de cire, et/ou
que la couche de finition (16) présente des composants durcissables aux UV.

5. Film de transfert (10) selon l'une quelconque des revendications précédentes,
**caractérisé en ce que** la couche de finition (16) présente des agents matifiants.

6. Film de transfert (10) selon l'une quelconque des revendications précédentes,
**caractérisé en ce que** la couche de finition (16) est réalisée sous forme d'un vernis doux au toucher et/ou
qu'une couche anti-adhésive (22) est disposée entre la couche de finition (16) et la structure maîtresse ou le vernis structuré (18).

7. Film de transfert (10) selon l'une quelconque des revendications précédentes,
**caractérisé en ce qu'**une couche intermédiaire (24), en particulier une couche intermédiaire à adhérence, est disposée sur le côté de la couche de finition (16) opposé au film support (12), en particulier
dans lequel la couche intermédiaire (24) présente des acrylates réticulables, en particulier des polyacrylates, des résines de polyester, des résines alkydes ainsi que leurs modifications, des résines aminées, des résines d'amidon ou des résines phénoliques, et/ou
dans lequel la couche intermédiaire (24) présente une épaisseur de couche comprise entre 0,1 µm et 10 µm, de préférence entre 0,5 µm et 5 µm, de manière particulièrement préférée entre 0,3 µm et 4 µm.

8. Film de transfert (10) selon l'une quelconque des revendications précédentes,
**caractérisé en ce que** le film de transfert (10), en particulier la couche de transfert (14), présente une couche décorative (26), en particulier une couche de couleur, une métallisation (28) et/ou une couche adhésive (30) ou un apprêt, et/ou qu'un vernis haptique (32) est disposé au moins par endroits sur le côté de la couche support (20) repoussant la couche de finition (16) ou sur le côté du vernis structuré (18) repoussant la couche de finition (16).

9. Procédé de fabrication d'un film de transfert (10), en particulier d'un film de transfert (10) à utiliser comme film IMD doux au toucher, qui comprend un film support (12) et une couche de transfert (14) disposée sur le film support (12) et détachable du film support (12) avec une couche de finition (16), dans lequel une structure maîtresse, en particulier structure en relief maîtresse, est ménagée ou produite dans le film support (12) et dans lequel la couche de finition (16) est appliquée sur la structure maîtresse, dans lequel une structure complémentaire à la structure maîtresse du film support (12) est moulée dans la couche de finition (16), et dans lequel un vernis structuré (18) présente la structure maîtresse,
dans lequel le film support (12) est constitué du vernis structuré (18) ou
dans lequel le film support (12) présente une couche support (20) et le
vernis structuré (18) disposé sur la couche support (20) en direction de la couche de transfert (14), et que la couche de finition (16) est réalisée de sorte qu'elle présente un effet doux au toucher, dans lequel le vernis structuré (18) présente des particules structurantes **caractérisé en ce que** 50 % à 80 % des particules structurantes sont de taille comprise entre 2 µm et 4 µm, dans lequel les 20 % à 50 % restants des particules sont formés de particules plus grandes, dont la taille est égale à 6 µm à 15 µm et
la couche de finition (16) est réalisée à partir de copolymères de polyuréthane et de polyol et/ou de copolymères de polyuréthane et de polyacrylates et dans lequel la couche de finition présente un degré de brillance compris entre 20 et **60.**

10. Utilisation du film de transfert (10) selon l'une quelconque des revendications 1 à 8 en tant que film **IMD.**

11. Utilisation du film de transfert (10) selon l'une quelconque des revendications 1 à 8 en tant que film doux au toucher.

12. Procédé, en particulier procédé IMD de fabrication d'un article moulé par injection (34) décoré avec une couche de transfert (14) d'un film de transfert (10), avec les étapes suivantes :
- la disposition d'un film de transfert (10) selon l'une quelconque des revendications 1 à 8 dans un moule de moulage par injection,
- le surmoulage par injection du film de transfert (10) avec une matière de pulvérisation plastique (36),
- le retrait du film support (12) conjointement avec la structure maîtresse de la couche de transfert (14) du film de transfert (10).

13. Procédé selon la revendication 12, **caractérisé en ce qu'**un durcissement aux UV de la couche de finition (16) est effectué après le traitement, en particulier le formage sur l'article moulé par injection.
